**Europäisches Patentamt**

(19) **European Patent Office**

**Office européen des brevets**

(11) Numéro de publication: **0 063 977**
**B1**

(12) # FASCICULE DE BREVET EUROPEEN

(45) Date de publication du fascicule du brevet:
26.02.86

(51) Int. Cl.⁴: **G 01 C 19/64**, G 02 F 1/35

(21) Numéro de dépôt: **82400626.6**

(22) Date de dépôt: **06.04.82**

(54) **Dispositif optique interférométrique avec miroir(s) à conjugaison de phase, en particulier pour gyromètre laser.**

(30) Priorité: **08.04.81 FR 8107054**

(43) Date de publication de la demande:
**03.11.82 Bulletin 82/44**

(45) Mention de la délivrance du brevet:
**26.02.86 Bulletin 86/9**

(84) Etats contractants désignés:
**DE GB NL SE**

(56) Documents cités:
**EP - A - 0 026 128**
**FR - A - 2 446 482**
**FR - A - 2 449 897**
**US - A - 4 198 162**

**JOURNAL OF THE OPTICAL SOCIETY OF AMERICA, vol. 70, no. 11, novembre 1980, pages 1320-1323, New York, USA F.A. HOPF: "Interferometry using conjugate-wave generation"**
**OPTICS COMMUNICATIONS, vol. 31, no. 3, decembre 1979, pages 257-258, Amsterdam, NL. A.E. SIEGMAN: "Dynamic interferometry and differential holography of irregular phase objects using phase conjugate reflection"**

(73) Titulaire: **Etablissement Public dit: CENTRE NATIONAL DE LA RECHERCHE SCIENTIFIQUE (CNRS), 15, Quai Anatole France, F-75700 Paris (FR)**

(72) Inventeur: **Borde, Christian, Jean, Raoul, 21, passage Gambetta, F-75020 Paris (FR)**

(74) Mandataire: **Martin, Jean-Jacques et al, Cabinet REGIMBEAU 26, Avenue Kléber, F-75116 Paris (FR)**

**0 063 977**

## Description

L'invention concerne les dispositifs optiques interférométriques excités en lumière laser, et s'intéresse en particulier aux gyromètres laser passifs.

La structure de base du dispositif selon l'invention est celle d'un interféromètre de MICHELSON, qui comporte classiquement:

. une entrée prévue pour recevoir un rayonnement laser,

. un moyen séparateur définissant deux trajets aval différents pour le rayonnement laser,

. deux organes-miroirs interposés respectivement sur l'un et l'autre des trajets aval, pour renvoyer un rayonnement laser incident suivant le même trajet, mais en sens inverse,

. des moyens comparateurs aptes à comparer par interférence les deux rayonnements laser ainsi renvoyés.

Une caractéristique habituelle de l'interféromètre de MICHELSON de type classique est sa sensibilité aux phénomènes réciproques le long du trajet optique - c'est-à-dire les phénomènes qui déphasent l'onde rayonnée indépendamment du sens de propagation - et son insensibilité aux phénomènes non-réciproques - qui au contraire dépendent du sens de propagation, c'est-à-dire ne sont pas les mêmes pour le trajet aller et le trajet retour.

Lorsque l'on souhaite étudier les seuls phénomènes non-réciproques, il est nécessaire d'utiliser un autre type d'interféromètre, l'interféromètre de SAGNAC, qui est essentiellement sensible aux variations non-réciproques. Une telle structure est notamment décrite dans le FR-A-2.449.897, qui concerne un gyromètre laser: l'effet non-réciproque mesuré est dans ce cas l'effet inertiel relativiste, dit "effet SAGNAC". La difficulté réside dans le fait que l'interféromètre SAGNAC reste sensible aux aberrations réciproques, par exemple celles qui pourraient apparaitre du fait des variations de température ou de l'utilisation d'une fibre optique multimode. Il est donc nécessaire de compenser ces aberrations par différents procédés; l'objet de ce document est précisément de proposer une structure qui aboutisse à une telle compensation.

On connaît par ailleurs les propriétés des miroirs à conjugaison de phase (MCP), dont des applications ont été décrites dans l'article de A.E. SIEGMAN "Dynamic interferometry and differential holography of irregular phase objects using phase conjugate reflection", in Optics Communications, vol. 31, n° 3, déc. 1979 pp 257-258 (qui, sans mélanger deux faisceaux comme dans un interféromètre de MICHELSON, utilise l'effet retard du MCP pour étudier l'évolution temporelle d'un phénomène) ou celui de F.A. Hopf "Interferometry using conjugate-wave generation" in Journal of the Optical Society of America, vol. 70, nov. 1980, pp. 1320-1323 (qui décrit un amplificateur paramétrique optique à MCP appliqué à un interféromètre à conjugaison, c'est-à-dire un type d'interféromètre dérivé d'un interféromètre de MACH-ZENDER).

Le but de l'invention est de réaliser un dispositif ayant - à la différence des dispositifs décrits dans les documents précités - la structure d'un interféromètre de MICHELSON, mais qui fonctionnellement ne soit plus sensible qu'aux seules variations non-réciproques, devenant donc "inderéglable" a l'égard des variations réciproques.

A cet effet, selon l'invention, l'un au moins des deux organes-miroirs de la structure énoncée plus haut est un organe formant miroir à conjugaison de phase, apte à compenser les déphasages réciproques produits sur le(s) trajet(s) aval(s) respectif(s), de sorte que les moyens comparateurs délivrent une information exclusivement représentative des variations non-réciproques existant sur l'un et/ou l'autre desdits trajets.

De préférence, le miroir à conjugaison de phase comporte un milieu optiquement non-linéaire. Avantageusement, on applique à ce milieu deux ondes pompes de sens inverse. En pratique, les ondes pompes sont définies à partir d'un prélèvement effectué sur le rayonnement laser d'entrée.

Dans une réalisation préférentielle de l'invention, les deux organes-miroirs sont des organes formant miroir à conjugaison de phase.

Plus particulièrement, les moyens de comparaison comprennent la lame séparatrice déjà citée et une autre lame séparatrice placée sur le trajet du rayonnement laser dans sa partie commune aux deux trajets aval différents et deux dispositifs photo-détecteurs qui reçoivent respectivement les rayonnements extraits par les deux lames séparatrices.

Différentes variantes et/ou aménagements pratiques sont avantageux. En particulier, on peut, dans l'un au moins des deux trajets aval différents, interposer un ou plusieurs des éléments suivants:

- filtre spatial, par exemple du type trou d'épingle,

- polariseur, tel qu'un prisme de Glan,

- déphaseur optique et ses moyens de commande,

- modulation optique, réciproque ou non, avec en principe démodulation synchrone au niveau des détecteurs.

Par ailleurs, les deux miroirs à conjugaison de phase peuvent, dans certains cas au moins, être réunis en un seul.

Selon une caractéristique tout particuliérement intéressante de l'invention, les deux miroirs à conjugaison de phase sont proches l'un de l'autre, et les deux trajets aval forment ensemble au moins une boucle (de surface non nulle). On obtient ainsi un gyromètre à laser.

La plupart du temps, on prévoit la disposition symétrique suivante: les deux trajets aval differents forment deux circuits sensiblement fermés, qui sont sensiblement de même géométrie, et spatialement rapprochés l'un de l'autre (superposés par exemple).

Dans un mode de réalisation préférentiel de l'invention, les trajets aval différents sont définis, au moins en

2

partie,.par des fibres optiques.

Selon une réalisation particulière, les fibres optiques sont des fibres multimodes.

D'autres caractéristiques et avantages de l'invention apparaîtront à la lecture de la description détaillée qui va suivre, faite en référence aux dessins annexés, donnés pour.illustrer à titre d'exemple non limitatif différents modes de réalisation de la présente invention, et sur lesquels:

- la figure 1 illustre le schéma de principe de l'interféromètre selon la présente invention, équipé de deux miroirs à conjugaison de phase;

- la figure 2 illustre un schéma plus détaillé de l'interféromètre de la figure 1;

- les figures 2A et 2B illustrent les courbes de réponse au niveau des détecteurs D1 et D2, pris dans les figures 1 ou 2;

- la figure 3 est un schéma illustrant le mode de réalisation préférentiel de miroir à conjugaison de phase;

- les figures 4A et 4B illustrent respectivement le mode de fonctionnement d'un miroir classique et d'un miroir à conjugaison de phase;

- les figures 5 à 8 illustrent différentes variantes de réalisation de l'invention, appliquées ici à l'interféromètre de la figure 1;

- la figure 9 illustre un premier mode de réalisation de gyromètre à laser passif, selon la présente invention, auquel sont incorporés des miroirs à conjugaison de phase; et

- la figure 10 illustre une variante de réalisation particulièrement avantageuse du gyromètre de la figure 9, dans laquelle les trajets optiques sont définis par des fibres optiques.

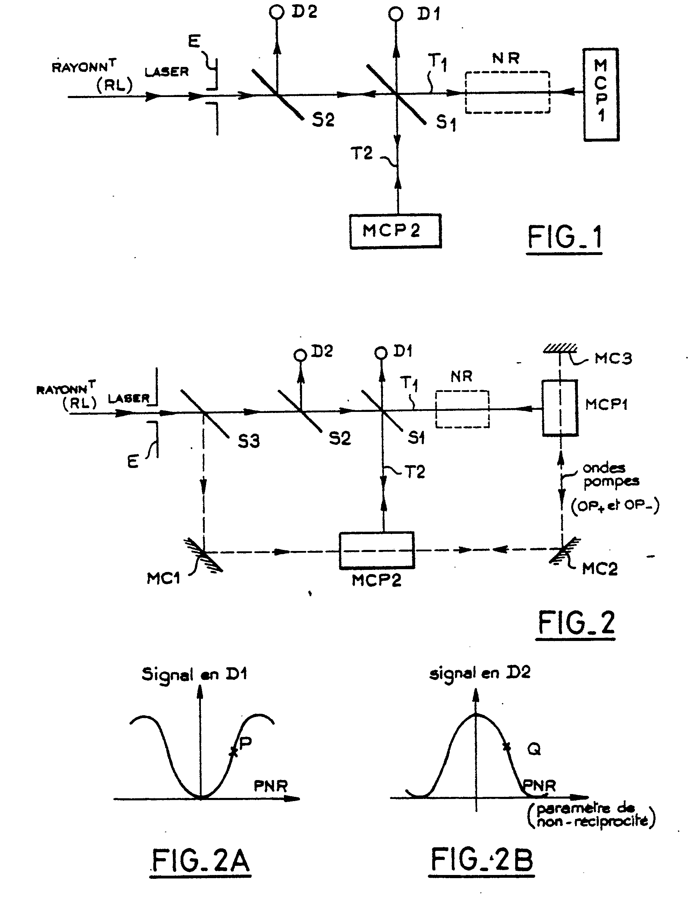

Sur la figure 1, la référence E désigne symboliquement une entrée, par exemple un écran perforé, à travers laquelle un rayonnement laser RL peut entrer dans un interféromètre, qui est ici du type Michelson ou plus précisément Twyman-Green.

Une lame séparatrice S1 divise le faisceau laser en deux parties, qui suivent respectivement des trajets optiques T1 et T2 différents. Les mots "trajets optiques différents" s'entendent ici en ce que les chemins optiques peuvent être différents, ou en ce que, les chemins optiques étant en partie les mêmes, le faisceau laser divisé va les parcourir en sens inverse.

Une partie du faisceau laser traverse donc la lame séparatrice S1 pour suivre un trajet optique T1, et aller vers un premier miroir à conjugaison de phase noté MCP1. Une partie de ce faisceau laser incident est réfléchie en sens inverse sur le trajet T1, pour être renvoyée en retour sur la lame séparatrice S1. Par réflexion sur celle-ci, le faisceau ayant subi le trajet T1 va se trouver pour partie dérive vers un détecteur D1. L'autre partie du faisceau va traverser la lame séparatrice S1, pour reprendre le trajet d'entrée du rayonnement. De préférence, on prévoit également une autre lame séparatrice S2, qui permettra de détourner à nouveau une partie du même faisceau réfléchi vers un autre photodétecteur D2. La partie du faisceau incident RL qui sera réfléchie par la lame séparatrice S2 peut être utilisée par exemple pour servir de référence sur l'intensité du rayonnement laser incident.

Si l'on revient maintenant au rayonnement laser incident, lorsqu'il arrivait sur la lame séparatrice S1, l'autre partie de ce rayonnement incident va se trouver réfléchie sur la lame séparatrice S1 vers le bas, suivant un second trajet optique T2, aboutissant de préférence à un second miroir à conjugaison de phase MCP2. A son tour, celui-ci réfléchit une partie du faisceau qu'il reçoit, et cette partie est donc retournée par la lame séparatrice S1. Une partie de ce rayonnement réfléchi va traverser la lame séparatrice S1 pour aller elle aussi vers le photodétecteur D1. Une autre partie va se trouver réfléchie sur la lame séparatrice S1, puis sur la lame séparatrice S2, pour aller frapper le photodétecteur D2.

Comme on le verra plus loin, les signaux obtenus au niveau du photodétecteur D1, et éventuellement au niveau du photodétecteur D2 lorsque celui-ci est prévu, sont représentatifs de non-réciprocités optiques existant sur l'un et l'autre des trajets T1 et T2. Sur la figure 1, le cadre tireté noté NR représente une telle non-réciprocité. Bien qu'il soit préférable d'utiliser deux miroirs à conjugaison de phase, ou bien comme on le verra plus loin, un seul miroir à conjugaison de phase jouant ce rôle à la fois sur les deux trajets T1 et T2, on peut aussi, lorsque la non-réciprocité existe seulement sur l'un des trajets, ici T1, utiliser le miroir à conjugaison de phase en liaison avec ce trajet optique, et utiliser un miroir classique à la place du miroir MCP2.

Les miroirs à conjugaison de phase peuvent être de différents types. La réflexion avec conjugaison de phase suppose, a priori un retournement du front d'onde, et également, en toute rigueur, une phase de l'onde renvoyée qui soit opposée à celle de l'onde incidente, à une phase constante près, spécifique du miroir, et indépendante de l'onde incidente (mais ce critère sur la phase n'est pas toujours considéré comme impératif). Pour réaliser un miroir à conjugaison de phase, on peut, par exemple, faire une exploration du front d'onde du rayonnement laser au moyen d'une mosaïque de détecteurs hétérodynes. A l'aide d'un laser formant oscillateur local, on mesure la phase au niveau de chaque détecteur, puis par des asservissements, on agit sur des déphaseurs qui vont fabriquer l'onde conjuguée renvoyée. On a également proposé d'utiliser une mosaïque de rétroréflecteurs, constituée d'un trés grand nombre de petits prismes en coin de cube, pour certaines applications.

La présente invention utilise avantageusement un effet non-linéaire dans un milieu optique. On connaît là-dessus l'effet Raman stimulé, l'effet Brillouin stimulé, les mélanges à trois ondes (amplificateurs paramétriques), ou les mélanges à quatre ondes, par exemple.

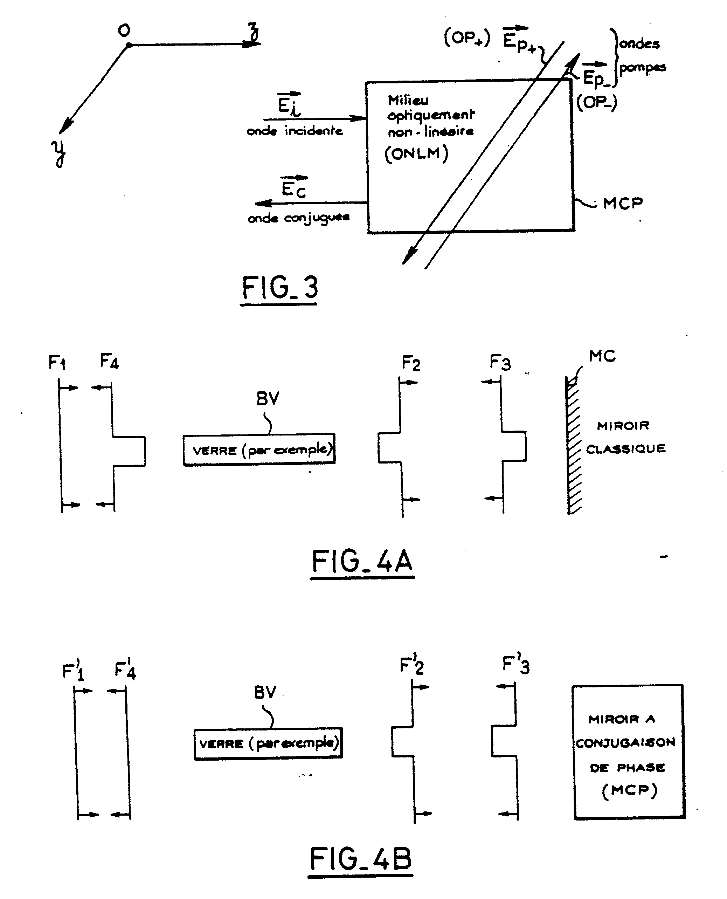

Toutefois, la présente invention préconise actuellement l'usage d'un miroir à conjugaison de phase stricte, fondé sur un mélange dégénéré à quatre ondes, de la manière illustrée schématiquement sur la figure 3. Le mélange est dit dégénéré lorsque les quatre ondes ont la même fréquence.

Pour les rayonnements de longueur d'ondes visibles, les milieux optiquement non-linéaires ou ONLM, actuellement considérés comme préférentiels, sont les cristaux d'oxydes de bismuth et de silicium ($Bi_{12} Si O_{20}$) ou de titanate de baryum ($Ti O_3 Ba$).

On considère une onde incidente, définie sur la figure 3 par son champ électrique $E_1$ en représentation complexe, avec

$$E_i = U. \exp [i(\omega t - kz + \varphi_i)] \quad (1)$$

L'onde est définie par la partie réelle de cette expression complexe. U est ici une grandeur, éventuellement complexe, de la forme Eo. f(x, y, z), représentant l'amplitude de l'onde incidente (Eo) et sa géométrie f(x, y, z). exp désigne la fonction exponentielle complexe, i désigne le symbole habituel des nombres complexes, $\omega$ désigne la pulsation angulaire de l'onde incidente, t désigne le temps, k est le nombre d'onde, z désigne une mesure de la coordonnée spatiale de propagation de l'onde suivant l'axe Oz de la figure 3, et $\varphi_i$ est représentatif de la phase de l'onde à l'instant t = 0 et au point pour lequel z = 0.

Dans une direction OY, on applique au milieu optiquement non-linéaire ONLM deux ondes pompes, notées en général $OP_+$ et $OP_-$, leurs champs électriques respectifs étant notés $E_{p+}$ et $E_{p-}$ et possédant respectivement des expressions de la forme suivante:

$$E_{p+} = V. \exp [i(\omega t + ky + \varphi_+)] \quad (2)$$
$$E_{p-} = W. \exp [i(\omega t - ky + \varphi_-)] \quad (3)$$

Dans ces équations, V et W sont des paramètres d'amplitude, de préférence non complexes et indépendants de l'espace autant que possible. k désigne à chaque fois le nombre d'onde de ces ondes pompes suivant la direction parallèle OY, et $\varphi_+$ et $\varphi_-$ sont représentatifs des phases initiales des deux ondes.

Bien que les choses soient en pratique assez complexes, on peut les faire comprendre schématiquement à l'aide de l'explication ci-après, qui ne fait intervenir qu'un développement dit "perturbatif" en physique, c'est-àdire en puissantes croissantes du champ, où l'on ne retient que l'ordre le plus bas.

Le milieu optiquement non-linéaire ONLM étant susceptible d'une polarisation diélectrique, que l'on notera ci-après P, il correspond à cette polarisation diélectrique une composante d'interaction P de la forme:

P proportionelle à $(E_{p+}). (E_{p-}). (E_i^*)$ (4)

Dans cette relation, le symbole $E_i^*$ représente le complexe conjugué du champ électromagnétique incident E, et est de la forme:

$$E_i^* = U^*. \exp [ -i (\omega t - kz + \varphi_i)] \quad (5)$$

Dès lors que les deux ondes pompes sont des ondes planes, et colinéaires, l'homme de l'art comprendra que l'expression de la grandeur P peut être finalement écrite sous la forme suivante:

P proportionelle à $U^* \exp i(\omega t + kz - \varphi_i). \exp i(\varphi_+ + \varphi_-)$ (6)

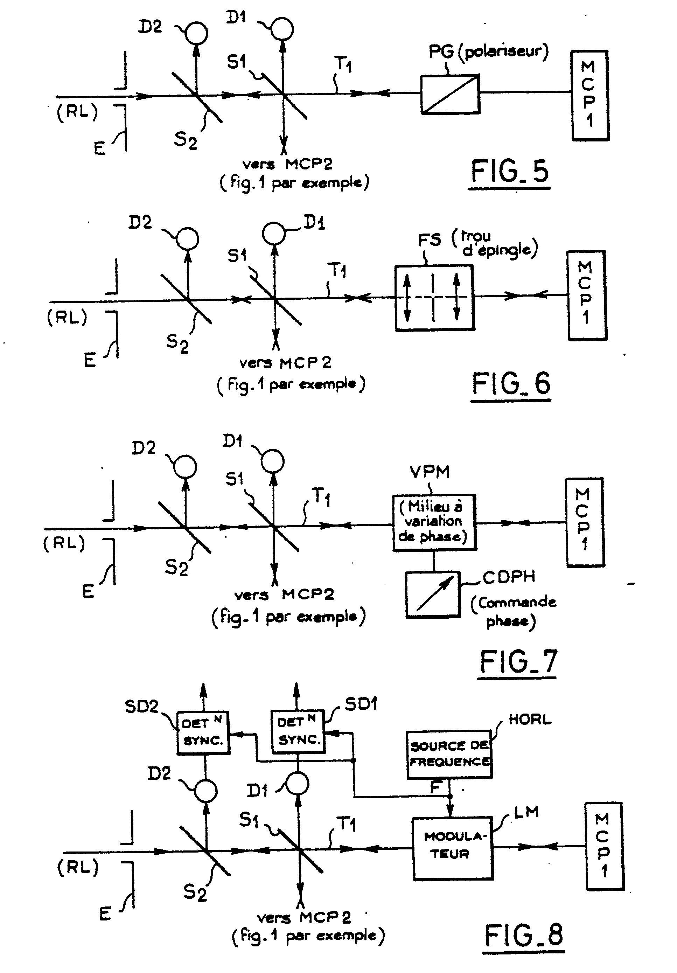

Cette polarisation rayonne un champ électromagnétique réfléchi ($E_c$), proportionnel lui aussi à l'équation (6), et qui manifeste la conjugaison de phase. Ce champ conjugué réfléchi est en tous points, à un coefficient complexe constant près, obtenu par renversement du temps dans l'expression de l'onde incidente. Cela signifie que, spatialement, le front d'onde reviendra exactement avec la même géométrie que celle qu'il avait avant de rencontrer le miroir à conjugaison de phase. Ceci est illustré très schématiquement sur les figures 4A et 4B pour le retournement du front d'onde.

Sur la figure 4A, on suppose un front d'onde plan incident $F_1$, qui traverse un barreau de verre. A cause de la vitesse de propagation différente dans le verre, à la sortie du barreau de verre, l'onde plane $F_1$ sera transformée en une onde $F_2$, qui demeure plane, sauf dans une partie formant un décrochement arrière au niveau où l'onde a traversé le barreau de verre. Après réflexion sur un miroir classique MC, l'onde revient en $F_3$, le décrochement ayant maintenant changé de côté, suivant les lois de réflexion de l'optique traditionnelle. Après qu'elle ait à nouveau traversé le barreau de verre BV, l'onde en $F_4$ aura un décrochement qui est maintenant d'amplitude double.

Les choses se passent très différemment dans le cas d'un miroir à conjugaison de phase, comme le montre la figure 4B. En effet, l'onde plane incidente $F'_1$ comporte bien toujours un décrochement, illustré en $F'_2$, après avoir traversé le barreau de verre. Mais, après la réflexion sur le miroir à conjugaison de phase MCP, l'onde $F'_3$ revient avec un décrochement qui se trouve du même côté que le décrochement précédent. Le décrochement en question peut donc être rigoureusement annulé après la nouvelle traversée du barreau de verre BV au cours du trajet retour, et l'onde $F'_4$ se présente alors à nouveau comme une onde plane rigoureuse.

Cet exemple simple montre qu'une réflexion sur un miroir à conjugaison de phase permet de s'affranchir de toute anomalie ou aberration optique présente sur le trajet de propagation d'une onde, dont l'exemple d'un barreau de verre n'est qu'une illustration schématique.

Si l'on revient à l'équation (6), on voit que celle-ci fait intervenir un terme indépendant du temps et de l'espace, qui ne comporte que les phases $\omega_+$ et $\omega_-$ des deux ondes pompes. Dans le cas où la présente invention fait usage de deux miroirs a conjugaison de phase, il est souhaitable que les phases des deux ondes pompes permettent que ce terme ne joue pas. La manière la plus simple de le réaliser consiste à utiliser les mêmes ondes pompes pour les deux miroirs à conjugaison de phase, comme le montre la figure 2.

Plus précisément encore, sur cette figure 2, les ondes-pompes sont définies à partir d'une fraction du rayonnement laser incident RL, réfléchi tout d'abord par une troisième lame séparatrice S3. Le trajet des ondes pompes à partir de S3 est défini par un trait tireté long, et comporte tout d'abord une réflexion sur un miroir classique MC1, la traversée aller du premier miroir à conjugaison de phase MCP2, une nouvelle réflexion sur un second miroir classique MC2, la traversée aller du miroir à conjugaison de phase MCP1, une réflexion pure et simple sur le même trajet par un miroir MC3, qui est soit un miroir classique, soit de préférence un

retroréflecteur en coin de cube ou un oeil de chat. Après réflexion, il se produit un trajet retour dans MCP1, puis un trajet retour dans MCP2 après réflexion sur MC2, l'onde retournant finalement par MC1 pour être renvoyée vers S3 qu'elle traverse pour partie, ce rayonnement étant perdu ou absorbé, de même que celui qui retourne dans la direction de l'incidence du rayonnement laser. La cavité génératrice du rayonnement laser d'entrée peut inclure le trajet des ondes pompes, MC3 étant l'un des miroirs de la cavité, et la structure étant un peu différente côté entrée E et lame S3.

On comprend maintenant que les ondes retournées par conjugaison de phase sur les trajets T1 et T2 respectivement par les miroirs MCP1 et MCP2 vont revenir de manière totalement indépendante des aberrations optiques pouvant exister sur ces trajets.

Dans chacun des bras ou trajets tels que T1 et T2 de l'interféromètre, l'onde retour, au niveau d'une séparatrice telle que S1 ou S2, est indépendante du trajet optique dans ce bras, ainsi que de la distance parcourue par l'onde, sauf lorsque les trajets T1 et/ou T2 sont sujets à des non-réciprocités.

Parmi les non-réciprocités (cadre en trait tireté NR sur la Figure 1), que l'on peut détecter et mesurer avec le dispositif de la figure 1 ou de la figure 2, on peut citer:
- l'effet Faraday, qui correspond à une non-réciprocité dans les milieux magnétiques,
- la dispersion saturée, qui correspond au comportement non-linéaire d'un milieu en amplitude, étant observé que l'intensité de l'onde réfléchie par le miroir à conjugaison de phase est généralement différente de l'intensité de la lumière incidente sur celui-ci; par exemple l'iode gazeux constitue un milieu saturable à la longueur d'onde de 5 145 àngströms (C.R. Acad. Sc. Paris 277B, 381, (1973)). La dispersion saturée peut être appliquée à la spectroscopie sous Doppler et à l'asservissement en fréquence des lasers.

Les figures 2A et 2B montrent l'allure des signaux détectés par les photodétecteurs D1 et D2 des figures 2 ou 1. Cette amplitude est portée en ordonnée, l'abscisse étant représentative d'un paramétre relatif à la non-réciprocité du milieu présent dans l'un et/ou l'autre des deux bras T1 et T2. Plus précisément, ce paramètre représente la différence de trajet optique entre les deux bras, créée par la non-réciprocité.

En l'absence de toute non-réciprocité, les deux ondes qui reviennent vers le laser auront subi exactement le même déphasage puisque les déphasages sur les deux trajets et à la réflexion ou à la transmission de la séparatrice S1 sont annulés par la conjugaison de phase: il y a donc interférence constructive et le signal détecté en D1 est maximum lorsque le paramètre de non-réciprocité PNR est nul (figure 2B).

Au contraire, pour le signal détecté en D1, on attend une interférence destructive et, en principe, un signal nul pour une non-réciprocité nulle (figure 2A).

On vérifie cette situation par une opération de renversement du temps appliquée au dispositif: ce renversement du temps doit redonner, vers le laser, une onde semblable à l'onde incidente, et conjugée de celle-ci.

Pour des raisons pratiques, le seul signal obtenu au niveau du détecteur D1 n'est généralement pas suffisant, et l'on prévoit donc de préférence un second détecteur en D2, avec la lame séparatrice associée S2, pour utiliser soit seulement le signal obtenu en D2, soit une combinaison des deux signaux obtenus en D1 et D2, qui peut être par exemple la différence D1-D2.

On décrira maintenant en référence aux figures 5 à 8 différentes variantes de réalisation qui peuvent être utilisées en combinaison, et permettre notamment d'améliorer l'utilisation des signaux détectés.

Sur la figure 5, on voit qu'un polariseur, tel qu'un prisme de Glan, est interposé sur le trajet T1 constituant l'un des bras de l'interféromètre. Ce polariseur permet d'obtenir une sélctivité sur l'onde conjugée, en éliminant les éventuels signaux parasites, provenant par example du miroir à conjugaison de phase. Bien entendu, un polariseur du même genre peut être placé sur l'autre bras T2, dont seul le début est illustré sur la figure 5, tout comme sur les figures 6 à 8.

Sur la figure 6, on a interposé dans le bras T1 de l'interféromètre un filtre spatial, constitué d'un diaphragme du type trou d'épingle, placé au foyer d'un télescope, schématisé sur la figure 6 par deux lentilles de part et d'autre du trou d'épingle. Ceci permet de réaliser la sélection du mode de propagation électromagnétique classiquement désigné par $TEM_{00}$, et permet par là une meilleure réjection des signaux parasites. Là encore, un tel filtre est avantageusement interposé également sur l'autre bras T2 de l'interféromètre.

La figure 7 illustre une autre variante, qui fait intervenir un déphasage du rayonnement sur l'un au moins des deux bras de l'interféromètre, ici le bras T1. La partie active du déphaseur, notée VPM, est constituée par un milieu capable de jouer sur la phase de l'onde, qui peut être constitué lui aussi par un système non réciproque, mais connu, et contrôlé par un dispositif de commande de phase CDPH. Pour réaliser un tel déphaseur, on peut utiliser par exemple l'effet Faraday, déjà cité, de manière connue en soi. La disposition de la figure 7 présente l'avantage important de permettre un réglage du point de fonctionnement de l'interféromètre, puisqu'il permet de faire varier la phase sur l'un des trajets, ou bien de la faire varier différemment sur les deux trajets T1 et T2. On peut alors déplacer par exemple le point de fonctionnement de l'interféromètre pour l'amener au point P de la figure 2A, ou bien encore au point Q de la figure 2B. De la sorte, en faisant par exemple la différence des signaux recueillis en D1 et D2, on aura finalement un signal qui passe des valeurs négatives aux valeurs positives, la valeur nulle correspondant à l'absene de non-réciprocité dans la partie à analyser, notée NR sur les figures 1 et 2.

Une autre variante est illustrée sur la figure 8, et elle fait intervenir une modulation sur le trajet T1. On interpose donc un modulateur de phase LM sur le trajet T1 de l'interféromètre, ce modulateur étant alimenté à partir d'une source de fréquence F, source qui est notée HORL sur la figure 8. Les signaux électriques recueillis par les photodétecteurs D1 et D2 sont appliqués respectivement à des étages de détection synchrones schématisés en SD1 et SD2, étages qui reçoivent eux aussi la fréquence de modulation F. Une telle modulation facilite beaucoup l'utilisation des signaux détectés. Cette modulation peut être ou non réciproque, ce qui dépend notamment du temps de réponse des miroirs à conjugaison de phase utilisés.

Dans une réalisation préférentielle, on réalise de la manière illustrée sur la figure 8 une modulation de phase dans un sens sur le bras T1 de l'interféromètre, et une modulation de phase en opposition à la même fréquence sur l'autre bras T2 de l'interféromètre, qui n'est qu'esquissé sur la figure 8.

Enfin, si l'on retourne à l'équation (6) déjà notée, il apparaît que l'onde renvoyée par les miroirs à conjugaison de phase comporte un terme qui dépend des phases $\omega_+$ et $\omega_-$ des ondes pompes; pour réaliser la modulation qui vient d'être citée ou le réglage de phase, on peut agir directement sur les phases des ondes pompes, au lieu d'interposer un modulateur de phase ou un variateur de phase sur les trajets T1 et T2, comme le montraient les figures 8 et 7.

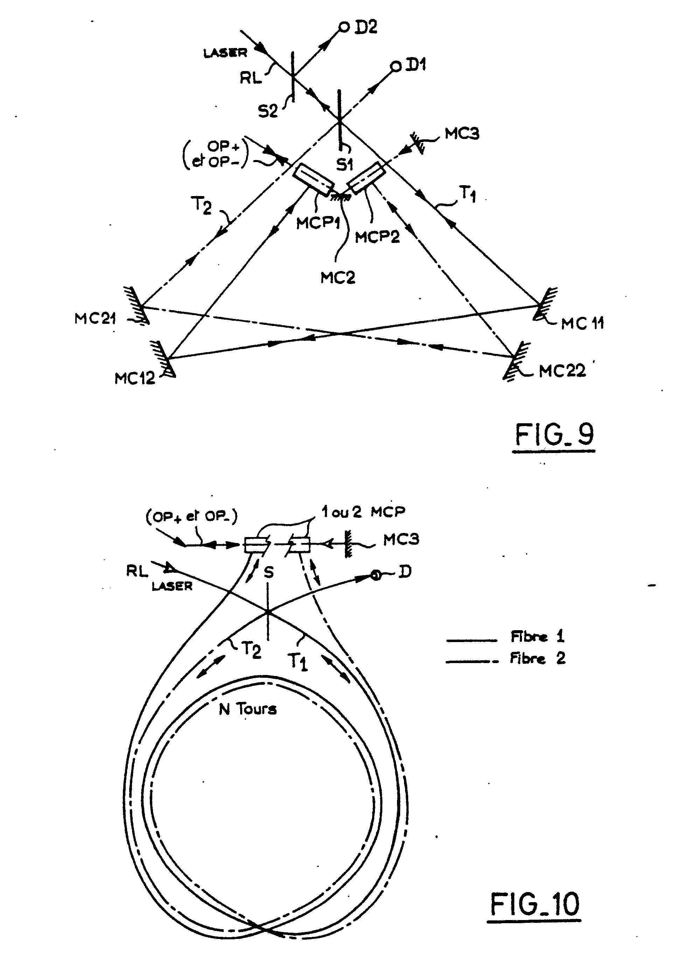

Le mode de réalisation préférentiel de la présente invention concerne les gyromètres passifs à laser, dont on décrira maintenant deux réalisations, en référence aux figures 9 et 10.

Sur la figure 9, le rayonnement laser incident RL est appliqué tout d'abord à la lame S2, puis à la lame séparatrice S1. La partie du rayonnement qui traverse S1 suit un trajet T1, qui passe sur les miroirs classiques MC11, puis MC12, pour faire un circuit sensiblement fermé, qui aboutit à un premier miroir à conjugaison de phase MCP1, placé près de la lame séparatrice S1.

La partie du rayonnement incident qui est réfléchie par la lame séparatrice S1 suit le trajet illustré en trait d'axe, et noté T2, qui va tout d'abord vers un miroir MC21, proche de MC12, puis vers un miroir MC22, proche de MC11, pour aboutir finalement à un second miroir à conjugaison de phase MCP2, proche de la lame séparatrice S1 et surtout de MCP1. Les deux miroirs à conjugaison de phase renvoient respectivement les ondes qu'ils reçoivent pour qu'elles retournent vers le même trajet qu'auparavant, ce qui les ramène donc respectivement par les trajets T1 et T2 vers la lame séparatrice S1.

Il se produit alors des interférences au niveau de la lame séparatrice S1, et le signal optique qui en résulte est perçu par le photodétecteur D1. D'autres interférences, différentes, se produisent comme précédemment indiqué au niveau de la lame séparatrice S2, et le signal optique qui en résulte est perçu par l'autre photodétecteur D2.

Il apparaît donc que les deux trajets suivis par les deux rayonnements laser en aval de la lame séparatrice S1 forment deux circuits sensiblement fermés, qui sont sensiblement de même géométrie, et quasi superposés l'un à l'autre.

L'homme de l'art comprendra que ceci permet de réaliser un gyromètre passif, comparable sur le principe physique au dispositif dit de Sagnac. En effet, lorsque l'ensemble du système tourne, il en résulte une non-réciprocité optique de sens inverse sur les deux trajets, d'où la possibilité d'obtenir un signal représentatif de ladite rotation.

Cette structure avec des miroirs à conjugaison de phase est très avantageuse dans le cas d'un gyromètre passif, puisqu'elle permet en particulier de s'affranchir de toutes les aberrations rencontrées par les rayonnements électromagnétiques sur les trajets séparés T1 et T2: en d'autres termes, le dispositif optique est automatiquement réglé quelles que soient les aberrations sur les trajets optiques, et aussi les différences de marches réciproques et stationnaires.

Bien entendu, et comme précédemment, on aura avantage, pour faciliter l'utilisation de signaux détectés, à utiliser les variantes décrites à propos des figures 5 à 8.

En particulier, en faisant intervenir une modulation réciproque de phase sur l'un des bras, ou sur les deux bras, au moyen d'un modulateur de phase placé immédiatement après la séparatrice S1, on obtient un dispositif très performant (la durée finie du trajet aller et retour sur chaque bras déphase l'action du modulateur sur les faisceaux aller et retour) en conséquence, l'un au moins des bras (ou trajets aval) forme au moins une boucle, associée à un miroir à conjugaison de phase.

Plus généralement, avec un tel gyromètre passif incluant deux miroirs à conjugaison de phase, l'état d'interférences détecté sur D1 ou D2 est indépendant de la position des miroirs, et de toutes différences de marches réciproques susceptibles d'intervenir sur les bras. On obtient donc ainsi un système particulièrement intéressant, en ce que par construction, la combinaison de moyens utilisés n'est sensible qu'au phénomène à mesurer, à savoir la rotation du gyromètre.

La figure 10 illustre un mode de réalisation de gyromètre encore plus intéressant, susceptible des mêmes variantes que précédemment. Pour clarifier le dessin, on a représenté une seule lame séparatrice S, qui correspond à S1 précédemment, et qui reçoit le rayonnement laser incident. Une première fibre optique T1, représentée en trait continu épais, reçoit le rayonnement qui traverse la lame séparatrice S. Cette fibre fait N tours sur elle-même, pour finalement aboutir à un miroir à conjugaison de phase MCP. De l'autre côté de la lame séparatrice S, une seconde fibre optique, illustrée en trait d'axe épais, définit un trajet T2, très proche du trajet T1, comportant le même nombre de tours N, mais s'enroulant en sens inverse, pour aboutir lui aussi sur le miroir à conjugaison de phase MCP. On voit que les deux trajets optiques T1 et T2 sont là encore sensiblement fermés, le miroir MCP étant très proche de la lame séparatrice S: ces trajets optiques présentent sensiblement la même géométrie, et sont spatialement rapprochés l'un de l'autre.

Le mode de réalisation de la figure 10 fait apparaître une autre caractéristique de l'invention, suivant laquelle un seul miroir à conjugaison de phase MPC peut, dans certaines configurations, jouer le rôle de deux miroirs. MPC1 et MCP2 précédemment utilisés.

Bien entendu, sur la figure 10 comme sur la figure 9, le ou les miroirs à conjugaison de phase sont convenablement excités par des ondes pompes $OP_+$ et $OP_-$, qui peuvent provenir elles aussi du rayonnement laser incident (variante non représentée), tandis que le retour de l'onde pompe pour obtenir les deux sens de la propagation est assurée par un miroir classique MC3, préférentiellement du type coin de cube ou oeil de chat.

L'état d'interférences présent au niveau de la lame S de la figure 10 est détecté par un photodétecteur D, et peut être traité comme précédemment ou de toute autre manière connue pour obtenir un signal représentatif de la rotation du gyromètre. De la même manière que dans les autres modes de réalisation, on peut bien entendu prévoir une autre lame séparatrice placée en amont de S, et associée à un second détecteur

Le mode de réalisation de la figure 10 présente encore un autre avantage très important: en combinaison avec les miroirs à conjugaison de phase d'un tel gyromètre, on peut utiliser des fibres optiques multimodes, ce qui n'était pratiquement pas possible avec les gyromètres passifs de la technique antérieure.

De plus, on peut réaliser des miroirs à conjugaison de phase dont l'onde conjuguée est amplifiée par rapport à l'onde incidente. Ceci permet d'utiliser des fibres optiques très longues, et par conséquent d'augmenter d'au moins un ordre de grandeur la sensibilité du gyromètre.

**Revendications .**

1. Dispositif optique interférométrique, du type comportant:
. une entrée (E) prévue pour recevoir un rayonnement laser (RL)
. un moyen séparateur (S1) définissant deux trajets aval différents (T1, T2) pour le rayonnement laser,
. deux organes-miroirs interposés respectivement sur l'un (T1) et l'autre (T2) des trajets aval, pour renvoyer un rayonnement laser incident suivant le même trajet (T1, T2), mais en sens inverse,
. des moyens comparateurs (S1, D1; S2, D2) aptes à comparer par interférence les deux rayonnements laser (RL) ainsi renvoyés, caractérisé en ce que l'un au moins des deux organes-miroirs est un organe formant miroir à conjugaison de phase (MCP1, MCP2), apte à compenser les déphasages réciproques produits sur le(s) trajet(s) aval respectif(s) (T1, T2), de sorte que les moyens comparateurs (S1, D1; S2, D2) délivrent une information exclusivement représentative des variations non-réciproques existant sur l'un et/ou l'autre desdits trajets (T1, T2).

2. Dispositif optique interférométrique selon la revendication 1, caractérisé par le fait que le miroir à conjugaison de phase (MCP1 ou MCP2) comporte un milieu optiquement non linéaire (ONLM).

3. Dispositif optique interférométrique selon la revendication 2, caractérisé par des moyens pour appliquer à ce milieu deux ondes pompes ($OP_+$, $OP_-$) de sens inverse.

4. Dispositif optique interférométrique selon l'une des revendications 2 et 3, caractérisé par le fait que les deux ondes pompes ($OP_+$ $OP_-$) sont de même fréquence

5. Dispositif optique interférométrique selon la revendication 4, caractérisé par le fait que les ondes pompes ($OP_+$, $OP_-$) sont définies à partir d'un prélèvement (S3) effectué sur le rayonnement laser (RL) d'entrée

6. Dispositif optique interférométrique selon l'une des revendications 1 à 5, caractérisé par le fait que les deux organes-miroirs (MCP1 et MCP2) sont des organes formant miroir à conjugaison de phase.

7. Dispositif optique interférométrique selon l'une des revendications 1 à 6, caractérisé per le fait que les moyens de comparaison comprennent le moyen séparateur (S1) déjà cité, un autre moyen séparateur (S2) placé sur le trajet du rayonnement laser (RL) dans sa partie commune aux deux trajets aval différents (T1,T2) et deux dispositifs photodétecteurs (D1,D2) qui reçoivent respectivement les rayonnements extraits par les deux moyens séparateurs (S1, S2).

8. Dispositif optique interférométrique selon l'une des revendications 1 à 7, caractérisé per le fait que l'un au moins des deux trajets aval différents comporte un filtre spatial (FS).

9. Dispositif optique interférométrique selon l'une des revendications 1 à 8, caractérisé par le fait qu'il comporte des moyens pour polariser (PG) le rayonnement laser parcourent d'un au moins des deux trajets aval différents (T1, T2).

10. Dispositif optique interférométrique selon l'une des revendicetions 1 à 9, caractérisé par le fait qu'il comporte des moyens de déphasage optique (VPM, CDPH) du rayonnement laser (RL) parcourant l'un au moins des deux trajets aval différents (T1, T2).

11. Dispositif optique interférométrique selon l'une des revendications 1 à 10, caractérisé par le fait qu'il comporte des moyens de modulation en phase (LM) du rayonnement laser (RL) parcourant l'un au moins des deux trajets aval différents (T1,T2), la modulation s'effectuant à fréquence prédéterminée (HORL), et qu'il est prévu une démodulation synchrone (SD1, SD2) à la même fréquence des signaux délivrés par les moyens de comparaison.

12. Dispositif optique interférométrique selon l'une des revendications 1 à 11, caractérisé par le fait que les deux organes formant miroir à conjugaison de phase (MCP1, MCP2) sont proches l'un de l'autre, ou réunis en un seul (MCP).

13. Dispositif optique interférométrique selon l'une des revendications 1 à 12, caractérisé par le fait que l'un au moins des deux trajets aval différents (T1,T2) forme au moins une boucle.

14. Dispositif optique interférométrique selon l'une des revendications 1 à 13, caractérisé par le fait que l'un au moins des deux trajets aval différents (T1,T2) est défini, au moins en partie, par une fibre optique.

15. Dispositif optique interférométrique selon la revendication 14, caractérisé par le fait que la fibre optique est une fibre optique multimodes.

16. Dispositif optique interférométrique selon l'une des revendications 1 à 15, caractérisé par le fait que les deux trajets aval différents (T1,T2) forment deux circuits sensiblement fermés, qui sont sensiblement de même géométrie, et spatialement rapprochés l'un de l'autre.

## Patentansprüche

1. Optische Interferometervorrichtung mit: einem Eingang (E) zum Empfang einer Laserstrahlung (RL), einer Trenneinrichtung (S1), welche zwei verschiedene nachgeschaltete Wege (T1, T2) für die Laserstrahlung bestimmt, zwei Spiegelorgane, welche jeweils auf dem einen (T1) und dem anderen (T2) nachgeschalteten Weg angeordnet sind, um eine einfallende Laserstrahlung zurückzusenden, welche dabei demselben Weg (T1, T2) folgt, aber in umgekehrter Richtung, Komparatoreinrichtungen (S1, D1; S2, D2), welche die zwei so zurückgesendeten Laserstrahlungen (RL) durch Interferenz vergleichen können, dadurch gekennzeichnet, daß wenigstens einer der zwei Spiegelorgane ein Organ ist, welches einen Phasenkonjugationsspiegel (MCP1, MCP2) bildet, der die reziproken Phasenverschiebungen kompensieren kann, die auf dem(n) jeweiligen nachgeschalteten Weg(en) (T1, T2) gebildet werden, so, daß die Komparatoreinrichtungen (S1, D1; S2, D2) eine Information liefern, die ausschließlich nichtreziproke Variationen darstellt, welche auf dem einen und/oder dem anderen der genannten Wege (T1, T2) existieren.

2. Optische Interferometervorrichtung nach Anspruch 1, dadurch gekennzeichnet, daß der Phasenkonjugationsspiegel (MCP1 oder MCP2) ein nicht lineares optisches Medium (ONLM) aufweist.

3. Optische Interferometervorrichtung nach Anspruch 2, gekennzeichnet durch Einrichtungen, um auf dieses Medium zwei entgegengesetzt gerichtete Wellenpumpen (OP$_+$, OP$_-$) anzuwenden.

4. Optische Interferometervorrichtung nach einem der Ansprüche 2 und 3, dadurch gekennzeichnet, daß die zwei Wellenpumpen (OP$_+$, OP$_-$) die gleiche Frequenz haben.

5. Optische Interferometervorrichtung nach Anspruch 4, dadurch gekennzeichnet, daß die Wellenpumpen (OP$_+$, OP$_-$) ab einer Trennung (S3) definiert werden, welche an der Laserstrahlung (RL) des Eingangs bewirkt wird.

6. Optische Interferometervorrichtung nach einem der Ansprüche 1 bis 5, dadurch gekennzeichnet, daß die zwai Spiegelorgane (MCP1 und MCP2) Organe sind, welche Phasenkonjugationsspiegel bilden.

7. Optische Interferometervorrichtung nach einem der Ansprüche 1 bis 6, dadurch gekennzeichnet, daß die Komparatoreinrichtungen die bereits genannte Trenneinrichtung (S1) umfassen, und eine andere Trenneinrichtung (S2), die auf dem Weg der Laserstrahlung (RL), auf seinem den zwei verschiedenen nachgeschalteten Wegen (T1, T2) gemeinsamen Teil, angeordnet ist, und zwei Photodetektorvorrichtungen (D1, D2), welche die durch die zwei Trenneinrichtungen (S1, S2) gewonnenen Strahlungen jeweils empfangen.

8. Optische Interferometervorrichtung nach einem der Ansprüche 1 bis 7, dadurch gekennzeichnet, daß wenigstens einer der zwei verschiedenen nachgeschalteten Wege einen räumlichen Filter (FS) aufweist.

9. Optische Interferometervorrichtung nach einem der Ansprüche 1 bis 8, dadurch gekennzeichnet, daß sie Einrichtungen zur Polarisation (PG) det Laserstrahlung aufweist, welche wenigstens einen der zwei verschiedenen nachgeschalteten Wege (T1, T2) durchläuft.

10. Optische Interferometervorrichtung nach einem der Ansprüche 1 bis 9, dadurch gekennzeichnet, daß sie optische Phasenverschiebungseinrichtungen (VPM, CDPH) der Laserstrahlung aufweist, welche wenigstens einen der zwei verschiedenen nachgeschalteten Wege (T1,T2) durchläuft.

11. Optische Interferometervorrichtung nach einem der Ansprüche 1 bis 10, dadurch gekennzeichnet, daß sie Phasenmodulationseinrichtungen (LM) der Laserstrahlung (RL) aufweist, welche wenigstens einen der zwei verschiedenen nachgeschalteten Wege (T1, T2) durchläuft, wobei die Modulation bei einer vorbestimmten Frequenz (HORL) eintritt, und dadurch, daß eine synchrone Demodulation (SD1, SD2), bei der selben Frequenz der Signale, die durch die Komparatoreinrichtungen geliefert werden, vorgesehen ist.

12. Optische Interferometervorrichtung nach einem der Ansprüche 1 bis 11, dadurch gekennzeichnet, daß die zwei Organe, welche Phasenkonjugationsspiegel (MCP1, MCP2) bilden, nahe beieinander, oder in einem einzigen (MCP) vereinigt sind.

13. Optische Interferometervorrichtung nach einem der Ansprüche 1 bis 12, dadurch gekennzeichnet, daß wenigstens einer der zwei verschiedenen nachgeschalteten Wege (T1, T2) wenigstens eine Schleife bildet.

14. Optische Interferometervorrichtung nach einem det Ansprüche 1 bis 13, dadurch gekennzeichnet, daß wenigstens einer der zwei verschiedenen nachgeschalteten Wege (T1, T2) wenigstens teilweise durch eine optische Faser bestimmt wird.

15. Optische Interferometervorrichtung nach einem der Ansprüche 1 bis 14, dadurch gekennzeichnet, daß die optische Faser eine optische Multimodenfaser ist.

16. Optische Interferometervorrichtung nach einem der Ansprüche 1 bis 15, dadurch gekennzeichnet, daß die zwei verschiedenen nachgeschalteten Wege (T1, T2) zwei im wesentlichen geschlossene Kreisbahnen bilden, die im wesentlichen dieselbe Geometrie haben, und räumlich angenähert sind.

**0 063 977**

### Claims

1. An optical interferometer device, of the type comprising:
an entry (E) provided for receiving laser radiation (RL),
separator means (S1) defining two different downstream paths (T1,T2) for the laser radiation,
two mirror members respectively interposed on one (T1) and the other (T2) of the downstream paths, for returning incident laser radiation on the same path (T1,T2), but in the opposite direction,
separator means (S1,D1; S2,D2) adapted to compare by interference the two laser radiations (RL) thus returned, characterised in that at least one of the mirror members is a member forming a phase conjugation mirror (MCP1, MCP2), adapted to compensate the reciprocal dephasings produced on the respective downstream path(s) (T1,T2), so that the separator means (S1,D1; S2,D2) deliver information exclusively representative of non-reciprocal variations existing in one and/or the other of the said paths (T1,T2).

2. An optical interferometer device according to claim 1, characterised by the fact that the phase conjugation mirror (MCP1 or MCP2) comprises an optically non-linear medium (ONLM).

3. An optical interferometer device according to claim 2, characterised by the means for applying to this medium two pump waves (OP$_+$,OP$_-$) of opposite sense.

4. An optical interferometer device according to claim 1 or claim 2, characterised by the fact that the two pump waves (OP$_+$,OP$_-$) are of the same frequency.

5. An optical interferometer device according to claim 4, characterised by the fact that the pump waves OP$_+$,OP$_-$) are defined from a sample (S3) of the laser radiation (RL) at the entry (E).

6. An optical interferometer device according to any one of claims 1 to 5, characterised by the fact that the two mirror members (MCP1 and MCP2) are members forming a phase conjugation mirror.

7. An optical interferometer device according to any one of claims 1 to 6, characterised by the fact that the comparison means comprise the separator means (S1) already recited, another separator means (S2) positioned on the laser radiation path (RL) in its part common to the two different downstream paths (T1,T2) and two photodetector devices (D1,D2) which respectively receive the radiation extracted by the two separator means (S1,S2).

8. An optical interferometer device according to any one of claims 1 to 7, characterised by the fact that at least one of the two different downstream paths comprises a spatial filter (FS).

9. An optical interferometer device according to any one of claims 1 to 8, characterised by the fact that it comprises means (PG) for polarising the laser radiation following at least one of the two different downstream paths (T1,T2).

10. An optical interferometer device according to any one of claims 1 to 9, characterised by the fact that it comprises means (VPM,CDPH) for optical dephasing of the laser radiation (RL) following at least one of the two different downstream paths (T1,T2).

11. An optical interferometer device according to any one of claims 1 to 10, characterised by the fact that it comprises means (LM) for phase modulation of the laser radiation (RL) following at least one of the two different downstream paths (T1,T2), the modulation being effected at a predetermined frequency (HORL), and that there is provided a synchronous demodulation (SD1,SD2) at the same frequency of signals delivered by the comparison means.

12. An optical interferometer device according to any one of claims 1 to 11, characterised by the fact that the two members forming phase conjugation mirrors (MCP1,MCP2) are close to each other, or connected as one (MCP).

13. An optical interferometer device according to any one of claims 1 to 12, characterised by the fact that at least one of the two different downstream paths (T1,T2) forms at least one loop.

14. An optical interferometer device according to any one of claims 1 to 13, characterised by the fact that at least one of the two different downstream paths (T1,T2) is defined, at least in part, by an optical fibre.

15. An optical interferometer device according to claim 14, characterised by the fact that the optical fibre is a multimodes optical fibre.

16. An optical interferometer device according to any one of claims 1 to 15, characterised by the fact that the two different downstream paths (T1,T2) form two substantially closed circuits, which are of substantially the same geometry, and spatially close to each other.

9

FIG_1

FIG_2

FIG_2A

FIG_2B

FIG_3

FIG_4A

FIG_4B

FIG_5

FIG_6

FIG_7

FIG_8

5

FIG. 9

FIG. 10